# EUROPÄISCHE PATENTANMELDUNG

(11) **EP 1 420 566 A1**
(43) Veröffentlichungstag der Anmeldung: **19.05.2004**
(21) Anmeldenummer: 03013201.3
(22) Anmeldetag: 12.06.2003
(51) Int. Cl.: H04L 29/08, H04L 29/06

(54) **Verfahren und Vorrichtung zum Datenaustausch zwischen mobilen Endgeräten und zentralen Diensten unter Verwendung eines Kommunikationsservers, der die Anfragen der mobilen Endgeräte an die zentralen Dienste umsetzt**

(30) Priorität: 15.11.2002 DE 10253548
(71) Anmelder: DB Systems GmbH, 60326 Frankfurt (DE)
(72) Erfinder: Grund, Torsten, 65934 Frankfurt am Main (DE); Kotting, Andreas, 63255 Langen (DE); Lang, Walter, 90513 Zirndorf (DE)
(74) Vertreter: Zinken-Sommer, Rainer

(57) **Zusammenfassung**

Die Erfindung betrifft ein Verfahren sowie eine Vorrichtung zum Datenaustausch zwischen mobilen Instanzen und in ortsfesten Installationen ablaufenden zentralen Diensten unter Verwendung eines Kommunikationsservers, der die Anfragen der mobilen Instanzen an die zentralen Instanzen umsetzt.

Hierbei werden die existierenden Software- und Hardware-Strukturen der zentralen Dienste (Hosts) weitestgehend unverändert eingebunden sowie die mobilen Instanzen über allgemein verfügbare öffentliche Mobilfunknetze, insbesondere GPRS (General Packed Radio Service), angebunden. Desweiteren sollen auf den Endgeräten der mobilen Instanzen nur Validierungshandlungen von geringer Komplexität erforderlich sein.

Dies wird dadurch erreicht, dass die von den Frontends einer mobilen Instanz (1) mittels Mobilfunk (5) übertragenen Daten durch einen dem Kommunikationsserver (7) vorgeschalteten Protokoll-Adapter (6) dekomprimiert und in SOAP-Aufrufe umgewandelt werden, die im Rahmen des Datenaustausches zu erbringende Funktionalität durch den Kommunikationsserver (7) in Form von Web Services zur Verfügung gestellt wird, und die zentralen Dienste über einen Transaktions-Server (Host-Adapter, 8.1) durch den Kommunikationsserver (7) angesprochen werden, wobei der Kommunikationsserver die zu übertragenden Daten in ein Daten-Array des für die Ausführung des zentralen Dienstes vorgesehenen Hosts (8) schreibt bzw. die von dem zentralen Dienst nach Prozessdurchführung wieder an die mobile Instanz zurückzugebenden Daten aus einem Daten-Array dieses Hosts (8) ausliest.

## Beschreibung

Die Erfindung betrifft ein Verfahren sowie eine Vorrichtung zum Datenaustausch zwischen mobilen Instanzen und in ortsfesten Installationen ablaufenden zentralen Diensten unter Verwendung eines Kommunikationsservers, der die Anfragen der mobilen Instanzen an die zentralen Instanzen umsetzt.

Im Zuge der fortschreitenden Modernisierung und Weiterentwicklung der Betriebs- und Geschäftsprozesse bei der Erbringung von Transport-Dienstleistungen insbesondere im Schienengüterverkehr steigt die Zahl der mittels elektronischer Datenverarbeitungsanlagen (EDV) auszuführenden Transaktionen stark an. Dies hat zur Folge, dass sich nunmehr verschiedenste Applikationen mit unterschiedlichen Anforderungen an die Datenübertragung im Einsatz befinden. Insbesondere bei stark dezentral orientierten, in der Fläche verteilten Produktionsstandorten (Zugbildungsbahnhöfe, Anschlussgleise...) kann dies zu Mängeln in der Datenqualität und logischen bzw. physikalischen Brüchen in den Informationsketten führen. So kann es sich beispielsweise ergeben, dass die für eine Zugfahrt erforderlichen Daten aus verschiedenen Datenverarbeitungssystemen abgefragt werden, von Produktionsmitarbeitern vor Ort logisch miteinander verknüpft sowie in einem abgeänderten physikalischen Format in eine weitere EDV-Anlage überführt werden müssen.
Bisherige Ansätze zur Lösung dieses Problems hatten zum Inhalt, direkt und ohne Integrationsfunktionalität auf die an den Betriebs- und Geschäftsprozessen beteiligten Applikationen zuzugreifen, wobei Emulationstechnologien bei hostorientierten Applikationen wie auch browserbasierte Ultra-Thin-Client Architekturen auf Basis asynchroner Datenkommunikation zum Einsatz angedacht waren. Dabei hat es sich immer wieder als nachteilig herausgestellt, dass keine integrierende Zusammenfassung und Aufbereitung der zur Bearbeitung vorgesehenen Daten, die aus den diversen, an den einzelnen Prozessen beteiligten Applikationen generiert werden, erreicht wurde. Darüberhinaus konnten mit asynchronen Transaktionen keine fachlich konsistenten Datenbestände erzeugt werden.

Der Erfindung liegt die Aufgabe zugrunde, ein Verfahren sowie eine Vorrichtung zum Datenaustausch zwischen mobilen Instanzen und in ortsfesten Installationen ablaufenden zentralen Diensten zu entwickeln, bei dem die existierenden Software- und Hardware-Strukturen der zentralen Dienste (Hosts) weitestgehend unverändert eingebunden werden. Die mobilen Instanzen sollen über allgemein verfügbare öffentliche Mobilfunknetze, insbesondere GPRS (General Packed Radio Service), angebunden werden, wobei die Funkstrecke besonderen Anforderungen hinsichtlich Datensicherheit (unbefugter Zugriff, Verfälschung...) und Datenübertragungkapazitäten unterliegt. Desweiteren sollen auf den Endgeräten der mobilen Instanzen nur Validierungshandlungen von geringer Komplexität erforderlich sein, um den Ausbildungsaufwand des Bedienpersonals sowie die Gefahr von Fehlbedienungen möglichst gering zu halten.

Diese Aufgabe wird in Verbindung mit dem Oberbegriff des Patentanspruches 1 erfindungsgemäß dadurch gelöst, dass die von den Frontends (Endgeräten) einer mobilen Instanz (1) mittels Mobilfunk (5) übertragenen Daten durch einen dem Kommunikationsserver (7) vorgeschalteten Protokoll-Adapter (Proxy-Server, 6) dekomprimiert und in SOAP-Aufrufe umgewandelt werden, die im Rahmen des Datenaustausches zu erbringende Funktionalität durch den Kommunikationsserver (7) in Form von Web Services zur Verfügung gestellt wird, und die zentralen Dienste über einen Transaktions-Server (Host-Adapter, 8.1) durch den Kommunikationsserver (7) angesprochen werden, wobei der Kommunikationsserver die zu übertragenden Daten in ein Daten-Array des für die Ausführung des zentralen Dienstes vorgesehenen Hosts (8) schreibt bzw. die von dem zentralen Dienst nach Prozessdurchführung wieder an die mobile Instanz zurückzugebenden Daten aus einem Daten-Array dieses Hosts (8) ausliest.
Durch die Beschränkung des Kommunikationsservers auf eine einheitliche und eindeutig definierte SOAP-Schnittstelle ist es in vorteilhafter Weise möglich, den Kommunikationsserver von den unterschiedlichen Anforderungen einzelner Clients freizuhalten und somit die Wartbarkeit und Erweiterungsfähigkeit des Systems deutlich zu erhöhen. Bei SOAP handelt es sich um das im Zusammenhang mit der Anwendung von WebServices an sich bekannte Simple Object Access Protocol. WebServices bezeichnen in diesem Zusammenhang ein System von Diensten, die als Bestandteil webbasierter verteilter Anwendungen genutzt werden. Im Gegensatz zu monolithisch geprägten Grossrechner-Architekturen bzw. Desktop-basierten Client-Sever-Architekturen, handelt es sich also um eine Architektur über das Internet miteinander verbundener Rechnersysteme, deren Anwendungen ebenfalls über das Internet miteinander kommunizieren bzw. interagieren.
Desweiteren ist es durch die Verwendung eines Transaktions-Servers in vorteilhafter Weise möglich, eine Anzahl m von Client-Aufrufen zu einer Anzahl n von Host-Funktions-Aufrufen zusammenzufassen bzw. aufzufächern. Die Anbindung der mobilen Instanzen an den Kommunikationsserver erfolgt über digitalen Mobilfunk, bevorzugt GPRS. Durch die Vorschaltung des Protokoll-Adapters kann auf einen direkten TCP/IP-Verkehr zwischen den mobilen Instanzen und dem geschotteten Bereich des Kommunikationsservers verzichtet werden. Die Internetverbindung besteht lediglich zwischen dem GPRS-Provider und der Server-Installation und wird zusätzlich durch ein IP-Tunnel-Protokoll (IPSec) gesichert. Somit wird die Sicherheit der Datenübertragungsstrecke deutlich erhöht. Zudem bietet der Protokoll-Adapter die Möglichkeit, über die Funkstrecke ein komprimiertes Protokoll zu verwenden, das den durch die SOAP-Schnittstelle bedingten Overhead reduziert. Die Kommunikationskosten über die Funkstrecke werden damit wirksam gesenkt.
Selbstverständlich können Endgeräte der mobilen Instanz, die nicht über Mobilfunk an die Einrichtung zum Datenaustausch angebunden werden müssen, sondern beispielsweise über feste Verkabelung im Rahmen eines unternehmenseigenen Intranets integriert sind, unmittelbar an die SOAP-Schnittstelle des Kommunikationsservers angeschlossen werden.

Es ist in diesem Zusammenhang besonders vorteilhaft, wenn in einem zweistufigen Verfahren zur eindeutigen Identifizierung des am Frontend (1) tätigen Bedieners sowohl durch den der mobilen Instanz räumlich zugeordneten Radius-Server des Mobilfunk-Betreibers als auch durch den Kommunikationsserver (7) eine Zuordnung zwischen einem jedem zugelassenen Nutzer eindeutig zugeordneten Personen-Identifikationsschlüssel und einem dem Endgerät des Frontends fest zugeordneten Geräte-Identifikationsschlüssel vorgenommen wird sowie die real vorliegende Kombination aus Personen- und Geräte-Identifikationsschlüssel mit den hierfür zulässigen Kombinationen abgeglichen wird. Die Authentifizierung erfolgt somit in zwei Schritten gegenüber zwei unabhängigen Systemen, wodurch die Sicherheit in vorteilhafter Weise erhöht wird. Im ersten Schritt identifiziert sich der Bediener mit seinem mobilen Endgerät beim zuständigen Radius-Server im Netz des Mobilfunkbetreibers. Nur wenn der Radius-Server den Personen-Identifikationsschlüssel in Kombination mit dem zugeordneten Geräte-Identifikationsschlüssel akzeptiert, werden die Nachrichten des mobilen Endgerätes an den Kommunikationsserver weitergeleitet. Dort findet dann eine zweite Authentifizierung des Bedieners statt. Anfragen an den Kommunikationsserver von Clients, die über Festnetz angeschlossen sind, bleiben mit dieser Konfiguration weiterhin möglich und durchlaufen lediglich die zweite Identifikationsprozedur.

Gemäß einer besonderen Ausführungsform des Erfindungsgegenstandes definiert eine Konfiguration mit Hilfe von Deskriptoren und / oder eine explizite Abfrage von Berechtigungen im Programmcode die Zuordnung von Benutzerrechten zur jeweils ausführbaren Funktionalität. Dies erfolgt in Abhängigkeit von der Zugehörigkeit des Aufrufenden und / oder der übergebenen Daten zu vorgebbaren Gruppen. Somit ist die Möglichkeit geboten, für das anfragende Frontend nur bestimmte Ressourcen bzw. Rechte freizugeben.

Es ist vorteilhaft, wenn eine Protokollierung der übertragenen Daten ("fachliche Protokollierung") und / oder eine applikationsspezifische Protokollierung von während der Datenübertragung auftretenden Fehlern und / oder Zuständen ("technische Protokollierung") durch Eintrag der zu protokollierenden Datenelemente in eine Datenbank und / oder zyklisch überschreibbare Tabelle erfolgt.

Eine besonders zweckmässige Weiterentwicklung des Erfindungsgedankens sieht vor, dass im Kommunikationsserver (7) die von den Frontends (1) zu vordefinierten Zeitpunkten ermittelten Software-Konfigurationen entgegengenommen, durch Vergleich mit den Inhalten einer Inventarisierungs-Datenbank auf Aktualität überprüft werden sowie im Abweichungsfall ein Steuerbefehl zur Übersendung der auf dem betroffenen Frontend (1) zu aktualisierenden Software an dieses Frontend ausgegeben wird. Durch diese Beschränkung auf eine bedarfsweise Aktualisierung wird sichergestellt, dass die aktiv im System eingesetzten Frontends der mobilen Instanz zeitnah mit aktuellen Software-Ständen versorgt werden, ohne jedoch eine aktive Verwaltung der Software-Konfigurationen aller Endgeräte der Feldebene auf dem Kommunikationsserver durchführen zu müssen. Alternativ ist es selbstverständlich möglich, in bekannter Weise alle Endgeräte einzeln zu verwalten. Zur Verringerung des Kommunikationsaufwandes über die Funkstrecke erfolgt die Übermittlung der Software an das betroffene Frontend der mobilen Instanz bevorzugt über eine diesem Frontend zugeordnete, via LAN oder Internet mit dem Kommunikationsserver verbundene Dockingstation.

Schließlich sieht eine Modifikation der Erfindung vor, dass das im Rahmen eines Eisenbahnbetriebes mit der Zugbildung beauftragte Personal mittels der mobilen Instanzen die für die Zugbildung erforderlichen Soll-Daten von den zentralen Diensten abruft, mit den realen Ist-Daten vergleicht sowie Korrektur-Daten und / oder korrigierte oder neu erhobene Ist-Daten an die zentralen Dienste zurückspeichert.

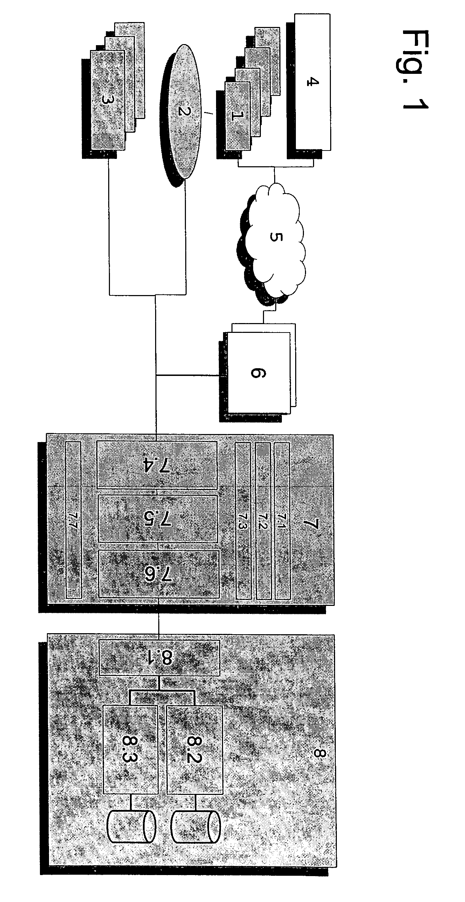

Der Erfindungsgedanke wird in nachfolgendem Ausführungsbeispiel visualisiert. **Figur 1** zeigt eine schematische Einrichtung zum Datenaustausch zwischen mobilen Instanzen und in ortsfesten Installationen ablaufenden zentralen Diensten unter Verwendung eines Kommunikationsservers, die in einer 3-Schichten-Architektur konzipiert ist. Mitarbeiter, die im Rahmen der Zugbildung auf den Güterbahnhöfen sowie bei der Zustellung und Abholung von Ladegut bei Kunden tätig sind, sind mit einem mobilen Endgerät mit graphischer Benutzerführung und Tastatur ausgestattet. Die mobilen Endgeräte (Schicht 1; Präsentationsschicht) kommunizieren über öffentlichen, aber verschlüsselten Mobilfunk mit einem Kommunikationsserver (Schicht 2; Steuerungsschicht). Dieser Server wiederum ist mit den bereits vorhandenen Hostsystemen zum kaufmännisch orientierten Auftragsmanagement des Güterverkehrs (Verwaltung und Abrechnung der Kundenaufträge) sowie für das betrieblich-technisch orientierte Produktionssystem des Güterverkehrs (z.B. Erstellung der Wagenreihung, der Meldezettel, Zerlegepläne für Rangierbahnhof...) verbunden. Die gesamte Applikationslogik wird auf den Hostsystemen vorgehalten (Schicht 3; Anwendungsschicht). Die mobilen Endgeräte hingegen verfügen nur über die Präsentationslogik und erlauben lediglich einfache fachliche Validierungen. Die bei Aufrufen übergebenen Daten sind ebenso wie die Rückgabedaten der Aufrufe Java-Objekte.
Der Kommunikationsserver ist im unternehmensinternen Netz angesiedelt, durch Firewalls nach aussen abgeschottet und bietet ausschliesslich eine SOAP-Schnittstelle an. Da dieses Protokoll für eine Datenübertragung mittels Mobilfunk aus Gründen der Datensicherheit sowie des erforderlichen Übertragungsvolumens nicht geeigent erscheint, ist für die Funkstrecke ein komprimiertes HTTP-Protokoll vorgesehen. Ein Adapter (Proxyserver) sorgt für die Umsetzung der Client-spezifischen Schnittstelle auf das SO-AP-Interface des Kommunikationsservers.
Eine eindeutige Identifizierung der Nutzer an den mobilen Endgeräten ist notwendig, um die Eingabe und Veränderung von Daten durch Unbefugte auszuschliessen. Der Personen-Identifikationsschlüssel besteht aus persönlicher Nutzerkennung (z.B. Nutzername) und PIN, der Geräte-Identifikationsschlüssel besteht aus einer eindeutigen und unveränderlichen Gerätekennung. Eine Prüfung von Personen- und Geräte-Identifikationsschlüssel findet sowohl im Radius-Server des Mobilfunknetzes als auch im Kommunikationsserver statt.
Nicht alle Nutzer dürfen im System die gleichen Funktionen ausführen. Deshalb sind die registrierten Nutzer zu fachlich begründeten bzw. tätigkeitsorientierten Gruppen zusammengefasst, die jeweils über gruppenspezifische Berechtigungen verfügen (z.B. Berechtigungsprofil der Tätigkeitsgruppe "Wagenmeister" oder "Systemadministrator"). Im Kommunikationsserver findet die Abbildung der durch die Authentifizierung ermittelten Identität bzw. Gruppenzugehörigkeit auf die mit dieser Gruppe verbundene Berechtigung statt.

Zur Inventarisierung und vor allem auch zur Aktualisierung der auf der Feldebene (= mobile Instanz) eingesetzten Hard- und/oder Software verfügen die Clients der mobilen Instanz über einen Agenten, der beim Einschalten des Gerätes oder zu anderweitig vorgebbaren Zeitpunkten die vorhandene Hard- und Softwarekonfiguration ermittelt. Die Daten werden in einer MOF-Datei (MOF=Managed Object Format) abgelegt und per Filetransfer an den Kommunikationsserver übertragen. Ein in den Applikationsserver (7.7) integrierter Agent überwacht neu eingetroffene MOF-Dateien und fügt diese in den Verzeichnisdienst des AAA-Servers (= Inventarisierungsdatenbank) ein. Auf diese Daten sind dann entsprechende Abfragen und Auswertungen durchführbar. Die Daten der Inventarisierung werden bei der ersten Erfassung gesamthaft, bei jeder weiteren Erfassung dann nur noch als Abweichungsdaten übertragen. Die eigentliche Software-Verteilung an die Endgeräte der mobilen Instanz erfolgt dann über Dockingstations, die mittels LAN an den Kommunikationsserver angeschlossen sind.

In einem konkreten Einsatzbeispiel führt ein in einem Güterbahnhof tätiger Mitarbeiter bei einem eingefahrenen Güterzug die Eingangskontrolle durch. Hierzu fordert er mittels seines Frontends (1) über den Kommunikationsserver (7) von der Geschäftslogik "Produktionssystem" (8.2) die Soll-Daten Wagenreihung, Ladungsgut, Wagennummer... an und gleicht diese mit dem realen Ist-Zustand im Zug ab. Nach Abschluss der Eingangskontrolle übermittelt der die aktualisierten Daten an das Produktionssystem (8.2) zurück.
Die Bremsprobeanlagen (BPA) (4) stellen im Rahmen der mobilen Endgeräte einen Sonderfall dar. Hierbei handelt es sich um stationäre Anlagen in Zugbildungsbahnhöfen, mittels derer die ordnungsgemässe Wirksamkeit der Bremse eines neu gebildeten Zuges vor dessen Abfahrt überprüft wird. Bislang wurde zur Ansteureung der Anlage eine analoge Punkt-zu-Punkt-Funkverbindung zwischen dem Steuergerät der BPA und einem Bediengerät des Rangierers aufgebaut. Im Rahmen der digitalen Datenkommunikation wird die Bremsprobeanlage nunmehr unter Vermittlung des Kommunikationsservers (7) durch das mobile Endgerät (1) eines Mitarbeiters im Rangierdienst angesteuert.

### Bezugszeichenliste:

- 1: Frontend (Endgerät) einer mobilen Instanz
- 2: Dockingstation einer mobilen Instanz
- 3: andere Clients (z.B. Intranet)
- 4: Bremsprobeanlage
- 5: Mobilfunk-Netz
- 6: Protokoll-Adapter (Proxyserver)
- 7: Kommunikationsserver
- 7.1: AAA-Server
- 7.2: Protokollierung
- 7.3: System Management
- 7.4: Web-Services
- 7.5: Abbildungslogik
- 7.6: Host-Gateway
- 7.7: Applikationsserver
- 8: Host-System eines zentralen Dienstes
- 8.1: Host-Adapter
- 8.2: Geschäftslogik eines zentralen Dienstes
- 8.3: Geschäftslogik eines zentralen Dienstes

## Patentansprüche

1. Verfahren zum Datenaustausch zwischen mobilen Instanzen und in ortsfesten Installationen ablaufenden zentralen Diensten unter Verwendung eines Kommunikationsservers, der die Anfragen der mobilen Instanzen an die zentralen Instanzen umsetzt,
**dadurch gekennzeichnet,**
**dass** die von den Frontends einer mobilen Instanz (1) mittels Mobilfunk (5) übertragenen Daten durch einen dem Kommunikationsserver (7) vorgeschalteten Protokoll-Adapter (6) dekomprimiert und in SOAP-Aufrufe umgewandelt werden,
die im Rahmen des Datenaustausches zu erbringende Funktionalität durch den Kommunikationsserver (7) in Form von Web Services zur Verfügung gestellt wird, und die zentralen Dienste über einen Transaktions-Server (Host-Adapter, 8.1) durch den Kommunikationsserver (7) angesprochen werden, wobei der Kommunikationsserver die zu übertragenden Daten in ein Daten-Array des für die Ausführung des zentralen Dienstes vorgesehenen Hosts (8) schreibt bzw. die von dem zentralen Dienst nach Prozessdurchführung wieder an die mobile Instanz zurückzugebenden Daten aus einem Daten-Array dieses Hosts (8) ausliest.

2. Verfahren zum Datenaustausch zwischen mobilen Instanzen und in ortsfesten Installationen ablaufenden zentralen Diensten unter Verwendung eines Kommunikationsservers nach Anspruch 1, **dadurch gekennzeichnet, dass** in einem zweistufigen Verfahren zur eindeutigen Identifizierung des am Frontend (1) tätigen Bedieners sowohl durch den der mobilen Instanz räumlich zugeordneten Radius-Server des Mobilfunk-Betreibers als auch durch den Kommunikationsserver (7) eine Zuordnung zwischen einem jedem zugelassenen Nutzer eindeutig zugeordneten Personen-Identifikationsschlüssel und einem dem Endgerät des Frontends fest zugeordneten Geräte-Identifikationsschlüssel vorgenommen wird sowie die real vorliegende Kombination aus Personen- und Geräte-Identifikationsschlüssel mit den hierfür zulässigen Kombinationen abgeglichen wird.

3. Verfahren zum Datenaustausch zwischen mobilen Instanzen und in ortsfesten Installationen ablaufenden zentralen Diensten unter Verwendung eines Kommunikationsservers nach mindestens einem der Ansprüche 1 bis 2, **dadurch gekennzeichnet, dass** durch Konfiguration mit Hilfe von Deskriptoren und / oder durch explizite Abfrage von Berechtigungen im Programmcode eine Zuordnung von Benutzerrechten zur jeweils ausführbaren Funktionalität in Abhängigkeit von der Zugehörigkeit des Aufrufenden und / oder der übergebenen Daten zu vorgebbaren Gruppen definiert wird.

4. Verfahren zum Datenaustausch zwischen mobilen Instanzen und in ortsfesten Installationen ablaufenden zentralen Diensten unter Verwendung eines Kommunikationsservers nach mindestens einem der Ansprüche 1 bis 3, **dadurch gekennzeichnet, dass** die übertragenen Daten und / oder die während der Datenübertragung auftretenden applikationsspezifischen Fehler und / oder Zustände durch Eintrag der zu protokollierenden Datenelemente in eine Datenbank und / oder zyklisch überschreibbare Tabelle protokolliert werden.

5. Verfahren zum Datenaustausch zwischen mobilen Instanzen und in ortsfesten Installationen ablaufenden zentralen Diensten unter Verwendung eines Kommunikationsservers nach mindestens einem der Ansprüche 1 bis 4, **dadurch gekennzeichnet, dass** im Kommunikationsserver (7) die von den Frontends (1) zu vordefinierten Zeitpunkten ermittelten Software-Konfigurationen entgegengenommen, durch Vergleich mit den Inhalten einer Inventarisierungs-Datenbank auf Aktualität überprüft werden sowie im Abweichungsfall ein Steuerbefehl zur Übersendung der auf dem betroffenen Frontend (1) zu aktualisierenden Software an dieses Frontend ausgegeben wird.

6. Verfahren zum Datenaustausch zwischen mobilen Instanzen und in ortsfesten Installationen ablaufenden zentralen Diensten unter Verwendung eines Kommunikationsservers nach mindestens einem der Ansprüche 1 bis 5, **dadurch gekennzeichnet, dass** die für die Zugbildung im Rahmen eines Eisenbahnbetriebes erforderlichen Soll-Daten mittels Frontends (1) von den zentralen Diensten (8.1, 8.2) abgerufen und mit den real vorliegenden Ist-Daten verglichen werden sowie Abweichungen in Form von Korrektur-Daten und / oder korrigierten oder neu erhobenen Ist-Daten an die zentralen Dienste zurückgespeichert werden.

7. Einrichtung zum Datenaustausch zwischen mobilen Instanzen und in ortsfesten Installationen ablaufenden zentralen Diensten unter Verwendung eines Kommunikationsservers, der die Anfragen der mobilen Instanzen an die zentralen Instanzen umsetzt,
**dadurch gekennzeichnet,**
**dass** ein dem Kommunikationsserver (7) vorgeschalteter Protokoll-Adapter (6) die von den Frontends einer mobilen Instanz (1) mittels Mobilfunk (5) übertragenen Daten dekomprimiert und in SOAP-Aufrufe umwandelt,
der Kommunikationsserver (7) die im Rahmen des Datenaustausches zu erbringende Funktionalität in Form von Web Services zur Verfügung stellt,
und der Kommunikationsserver (7) die zentralen Dienste über einen Transaktions-Server (Host-Adapter, 8.1) anspricht, wobei er die zu übertragenden Daten in ein Daten-Array des für die Ausführung des zentralen Dienstes vorgesehenen Hosts (8) schreibt bzw. die von den zentralen Diensten nach Prozessdurchführung wieder an die mobile Instanz zurückzugebenden Daten aus einem Daten-Array dieses Hosts (8) ausliest.

8. Einrichtung zum Datenaustausch zwischen mobilen Instanzen und in ortsfesten Installationen ablaufenden zentralen Diensten unter Verwendung eines Kommunikationsservers nach Anspruch 7, **dadurch gekennzeichnet, dass** in einem zweistufigen Verfahren zur eindeutigen Identifizierung des am Frontend (1) tätigen Bedieners sowohl der dem Frontend räumlich zugeordnete Radius-Server des Mobilfunk-Betreibers als auch der Kommunikationsserver (7) eine Zuordnung zwischen einem jedem zugelassenen Nutzer eindeutig zugeordneten Personen-Identifikationsschlüssel und einem dem Endgerät des Frontends fest zugeordneten Geräte-Identifikationsschlüssel vornehmen sowie die real vorliegende Kombination aus Personen- und Geräte-Identifikationsschlüssel mit den hierfür zulässigen Kombinationen abgleichen.

9. Einrichtung zum Datenaustausch zwischen mobilen Instanzen und in ortsfesten Installationen ablaufenden zentralen Diensten unter Verwendung eines Kommunikationsservers nach mindestens einem der Ansprüche 7 bis 8, **dadurch gekennzeichnet, dass** eine Konfiguration mit Hilfe von Deskriptoren und / oder eine explizite Abfrage von Berechtigungen im Programmcode die Zuordnung von Benutzerrechten zur jeweils ausführbaren Funktionalität in Abhängigkeit von der Zugehörigkeit des Aufrufenden und / oder der übergebenen Daten zu vorgebbaren Gruppen definiert.

10. Einrichtung zum Datenaustausch zwischen mobilen Instanzen und in ortsfesten Installationen ablaufenden zentralen Diensten unter Verwendung eines Kommunikationsservers nach mindestens einem der Ansprüche 7 bis 9, **dadurch gekennzeichnet, dass** eine Protokollierung der übertragenen Daten und / oder eine applikationsspezifische Protokollierung von während der Datenübertragung auftretenden Fehlern und / oder Zuständen durch Eintrag der zu protokollierenden Datenelemente in eine Datenbank und / oder zyklisch überschreibbare Tabelle erfolgt.

11. Einrichtung zum Datenaustausch zwischen mobilen Instanzen und in ortsfesten Installationen ablaufenden zentralen Diensten unter Verwendung eines Kommunikationsservers nach mindestens einem der Ansprüche 7 bis 10, **dadurch gekennzeichnet, dass** der Kommunikationsserver (7) die von den Frontends (1) zu vordefinierten Zeitpunkten ermittelten Software-Konfigurationen entgegennimmt, durch Vergleich mit den Inhalten einer Inventarisierungs-Datenbank auf Aktualität überprüft und einen Steuerbefehl zur Übersendung der auf dem betroffenen Frontend zu aktualisierenden Software an dieses Frontend ausgibt.

12. Einrichtung zum Datenaustausch zwischen mobilen Instanzen und in ortsfesten Installationen ablaufenden zentralen Diensten unter Verwendung eines Kommunikationsservers nach mindestens einem der Ansprüche 7 bis 11, **dadurch gekennzeichnet, dass** das im Rahmen eines Eisenbahnbetriebes mit der Zugbildung beauftragte Personal mittels Frontends (1) die für die Zugbildung erforderlichen Soll-Daten von den zentralen Diensten (8.1, 8.2) abruft, mit den real vorliegenden Ist-Daten vergleicht sowie Korrektur-Daten und / oder korrigierte oder neu erhobene Ist-Daten an die zentralen Dienste zurückspeichert.
